# EUROPEAN PATENT APPLICATION

(11) **EP 0 895 875 A1**
(43) Date of publication of application: **10.02.1999**
(21) Application number: 98904433.4
(22) Date of filing: 24.02.1998
(51) Int. Cl.: B60B 3/16

(54) **MAGNESIUM ALLOY WHEEL FOR VEHICLE**

(30) Priority: 26.02.1997 JP 42421/97; 26.02.1997 JP 42422/97
(71) Applicant: WASHI KOSAN Company Limited, Tokyo 105-0014 (JP)
(72) Inventor: YOSHIMURA, Katsunori, Toyama 933-0313 (JP)
(74) Representative: Fleuchaus, Leo, Dipl.-Ing.
(86) International application number: JP9800746
(87) International publication number: WO9838048

(57) **Abstract**

A magnesium alloy wheel having a waterproof structure where a seal ring is provided on a member which is connected to a center hole (50) including a hub hole (17). The wheel comprises a liner (53) by which contact corrosion of the different metals is avoided is provided between a hub flange (2) and the face (18) of a wheel (1) at which the wheel (1) is attached to a vehicle shaft (3) and between a hub (4) and the face (18), and a flanged washer (44) which has a recess in cross section and whose surface has a property of a small contact potential difference with respect to magnesium and is disposed at a position where a fastening member (43) for fastening the wheel (1) to a rim (42) is pressed against a disc (7). The contact corrosion caused by the stay of conductive medium such as water or salt water is prevented and the durability is significantly improved.

## Description

### Technical Field

The present invention relates to a magnesium alloy wheel for vehicles, and more particularly to a magnesium alloy wheel for vehicles having a structure for preventing corrosion due to entry of a medium such as water or salt water to the interior, from occurring.

### Background Art

In order to improve the driving stability and driving performance of a vehicle, a vehicle wheel has been largely reduced in weight. Recently, aluminum alloy wheels are mainly used. In passenger vehicles, the ratio of attachment of aluminum alloy wheels is growing to about 50%. The techniques of producing a light-alloy wheel are roughly classified into forging and casting. In view of the weight and rigidity of a wheel, forging is superior.

On the other hand, among light alloys which are used as a material of a wheel, an aluminum alloy is superior from the viewpoints of the cost of a raw material, the degree of difficulty of working into a wheel, and maintenance. In comparison of specific gravities of raw materials, however, magnesium is 1.74, and aluminum is 2.70. Namely, the specific gravity of magnesium is about 64% of that of aluminum. Magnesium is lightest among practical metals. It is further to be noted that magnesium has excellent strength and rigidity per same unit weight. Specifically, a magnesium alloy is excellent in specific strength (tensile strength/specific gravity), and specific proof stress (proof stress/specific gravity). In a wheel for a vehicle which is restricted in member weight, therefore, a magnesium alloy is very effective in the case where the strength and rigidity of the wheel are to be improved.

However, a magnesium alloy has not yet been used as the mainstream of a material of a vehicle wheel. One reason of the above is the material cost, and another reason is that it has a difficulty in spreading property in a working process. In a production by forging or casting, particularly, a special technique is required. Furthermore, the greatest factor that prevents magnesium from being practically used is the low corrosion resistance. With respect to the standard single electrode potential, magnesium is -2.37 and aluminum is -1.66. This shows that magnesium is a metal which is easily precipitated in a medium such as water or salt water. Incidentally, iron has a standard single electrode potential of -0.44. In the field of the corrosion protection technique, in order to protect one metal, a magnesium metal is juxtaposed, so that magnesium is precipitated as a positive electrode by using the contact potential difference, thereby protecting another metal. Under such circumstances, a surface treatment of a product in which magnesium is used as a material is important, and performed by a chemical treatment (various chromic acid treatments or the like) or an electrochemical treatment (various anodizing treatments or the like).

In a wheel structure in which a magnesium alloy and another metal are combined and integrated with each other, therefore, it is required to prevent the two metals from being directly contacted with each other. In a vehicle wheel, usually, fixation is attained by a hub flange which is disposed on the side of a vehicle and which is made of iron, a hub disposed on the flange face, and wheel nuts attached to mounting bolts. In the case of a magnesium alloy wheel, therefore, a portion where a magnesium alloy part is directly contacted with iron is formed. Consequently, the whole face of a portion where the two metals are contacted with each other should be electrically insulated from each other, or a material which produces a small contact potential difference with respect to the magnesium alloy should be selectively employed. Conventionally, as a measure for preventing contact corrosion from occurring, means for applying a material which produces a small contact potential difference with respect to a magnesium alloy, to a portion on the side of a wheel has been employed. However, a measure provided with such applying means only cannot completely prevent contact corrosion from occurring. In the case of a service environment where such a portion makes a contact with only dry air, even when a measure is realized by application only, there arises no particular problem. When a wheel is used in an environment where an electrically conductive medium such as water or salt water exists, this liquid serves as a medium so that contact corrosion between different kinds of metals occurs. Particularly, a vehicle wheel has a problem as follows. When a vehicle runs in winter on a road on which calcium chloride or the like serving as an antifreezing agent is sprayed, water or the like containing salt enters the wheel through a center hole from the outside. Because of structural reasons of the wheel, such water is not drained away so as to be retained in the center hole for a long term, and hence rapid corrosion easily advances. In this way, a vehicle wheel is exposed to severe service conditions in which the wheel is affected by various media. Therefore, the durability of a vehicle wheel is largely impaired.

In a magnesium alloy wheel for vehicles of an assembly type in which a disk and a rim of the magnesium alloy wheel are integrated with each other by being fastened by fastening members such as bolts, nuts, rivets, and an adaptor that are made of an iron material such as alloy steel or stainless steel, the potential difference between the fastening members and the wheel is so large that the magnesium alloy wheel is rapidly contact-corroded under conditions where an electrically conductive medium such as water or salt water exists. Conventionally, as a measure for preventing such contact corrosion from occurring, means for applying a plate coating of zinc, cadmium, or the like to fastening members is employed. However, such a fastening member is always exposed to dangers of corrosion such as that a strong friction force is produced in the plate coating of the fastening member, and that sand and gravel are flung up during a running of a vehicle so that the plate coating is damaged. When a vehicle runs in winter on a road on which calcium chloride or the like serving as an antifreezing agent is sprayed, salt water or the like is retained in the vicinity of the fastening member, thereby producing a problem in that contact corrosion easily advances. In order to solve the problems for practical use of a magnesium alloy wheel for vehicles, therefore, a structure in which an electrically conductive medium is prevented from being retained in the wheel is requested.

### Disclosure of Invention

The invention has been conducted in view of the above-discussed background of the prior art. It is an object of the invention to attain a remarkable improvement of the durability of a magnesium alloy wheel for vehicles which is excellent in lightness and strength, by preventing, when the wheel is mounted to a vehicle, contact corrosion due to entrance and retention of an electrically conductive medium such as water or salt water into the wheel, from occurring.

It is an object of the invention to prevent contact corrosion between a fastening member for assembling a disk and a rim of a wheel together, and a portion of a magnesium alloy wheel, from occurring.

The magnesium alloy wheel for vehicles according to the first invention is characterized in that a seal ring is disposed between members communicated with a center hole including a hub hole of the magnesium alloy wheel, thereby forming a waterproof structure.

The magnesium alloy wheel for vehicles according to the second invention is characterized in that the wheel comprises a liner for preventing contact corrosion between a hub flange of a vehicle and a hub, and the magnesium alloy wheel, from occurring.

In the thus configured first and second inventions, entrance and retention of an electrically conductive medium such as water or salt water into the center hole including the hub hole, and a liner is interposed in a wheel attaching portion between a hub flange and a hub of a vehicle, and a magnesium alloy wheel to prevent direct contact between the two members made of different kinds of metals from occurring, whereby contact corrosion in a place where usual visual inspection is disabled can be surely prevented from occurring. Therefore, contact corrosion which is the largest problem of a magnesium alloy can be prevented from occurring while ensuring performances, namely, lightness, specific strength, and specific proof stress which are very effective to a vehicle wheel. As a result, it is possible to attain an effect that the durability of a vehicle wheel which is used in severe environmental conditions where effects due to an electrically conductive medium cannot be inevitably avoided is remarkably improved.

The magnesium alloy wheel for vehicles according to the third invention is characterized in that, in a magnesium alloy wheel for vehicles in which a disk and a rim of the magnesium alloy wheel are assembled together by being fastened by a fastening member made of an iron material such as alloy steel or stainless steel, a flanged washer which has a recessed section shape is used at a place where the fastening member abuts against the dish of the magnesium alloy wheel, the flanged washer having a property that a contact potential difference between a surface of the washer and magnesium is small.

In the thus configured third invention, the flanged washer which has a recessed section shape and the property that the contact potential difference between the surface of the washer and magnesium is small is used at the place where the fastening member abuts against the disk of the magnesium alloy wheel, whereby the distance between the fastening member and the disk is prolonged, so that an electrically conductive medium such as water or salt water is prevented from being retained with extending over the two members. According to this configuration, corrosion due to direct contact between different kinds of metals in the vicinity of the fastening member can be prevented for a long term from occurring, thereby attaining an effect that the durability of a vehicle wheel of an assembly type can he remarkably improved.

In the first invention of the configuration described above, when a configuration having a ring member onto which the seal ring for the hub of the vehicle is fitted is employed, a predetermined effect of preventing contact corrosion from occurring can be attained only by providing means which is very simple and which is excellent in workability.

In the second invention of the configuration described above, when a boss portion having a hole diameter coincident with an outer diameter of the hub of the vehicle, and an outer diameter coincident with a diameter of a hub hole of the wheel, or an integral body of a plurality of hook portions is used, the liner is surely attached to a predetermined position so as to prevent the liner from slipping off from the wheel, whereby corrosion due to direct contact between different kinds of metals can be surely prevented from occurring.

As a material of the liner described above, a material which generates a small potential difference with respect to magnesium may be selected, or the liner may be formed by a coating made of a material which generates a small potential difference with respect to magnesium. Moreover, a configuration where a waterproof seal ring is disposed around the boss portion which is fitted into the hub hole may be employed.

Furthermore, in the magnesium alloy wheel for vehicles of the third invention of the configuration described above, the fastening member may be one selected from a bolt, a nut, a rivet, and an adaptor. In the flanged washer, a surface of the washer is formed by a coating of a metal such as zinc, beryllium, cadmium, or aluminum which generates a small potential difference with respect to magnesium, or the washer itself may be made of aluminum.

### Brief Description of Drawings

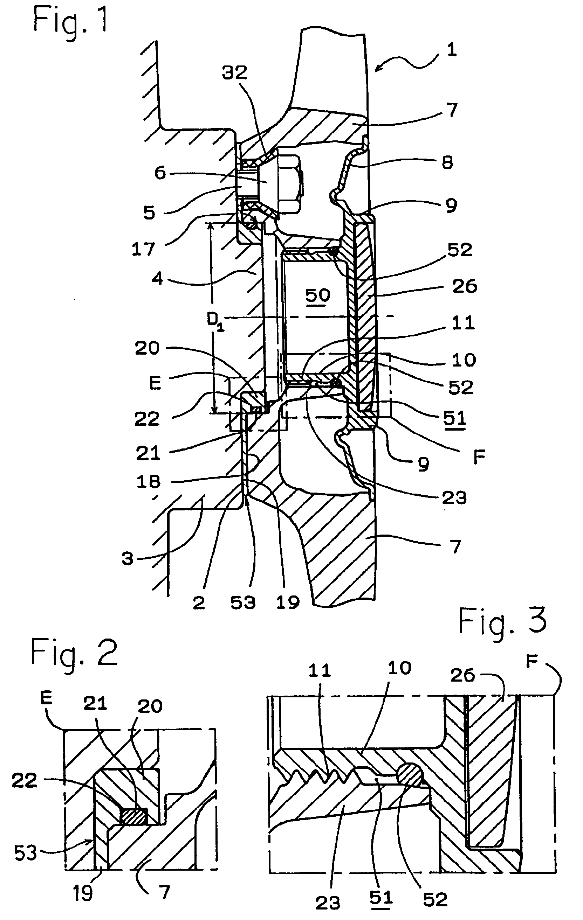

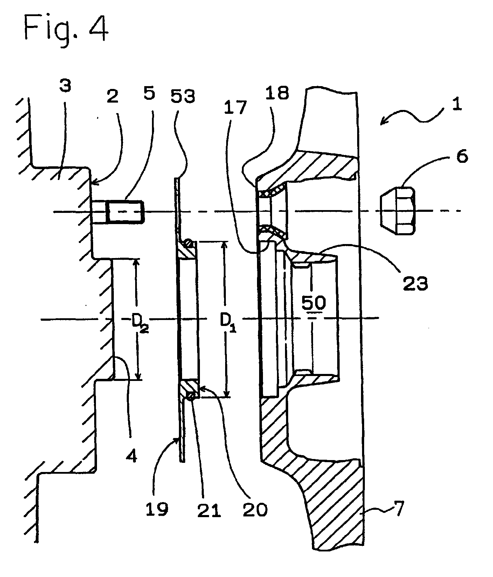

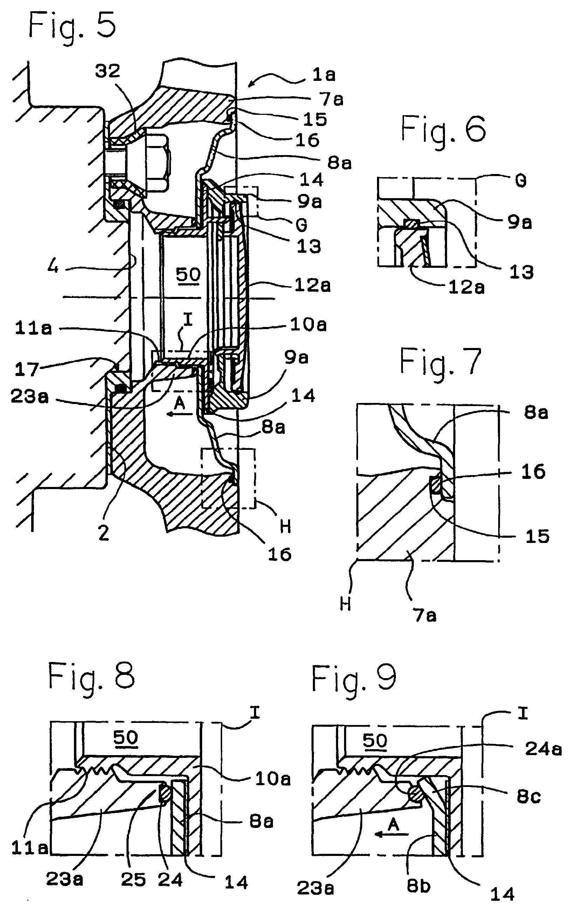

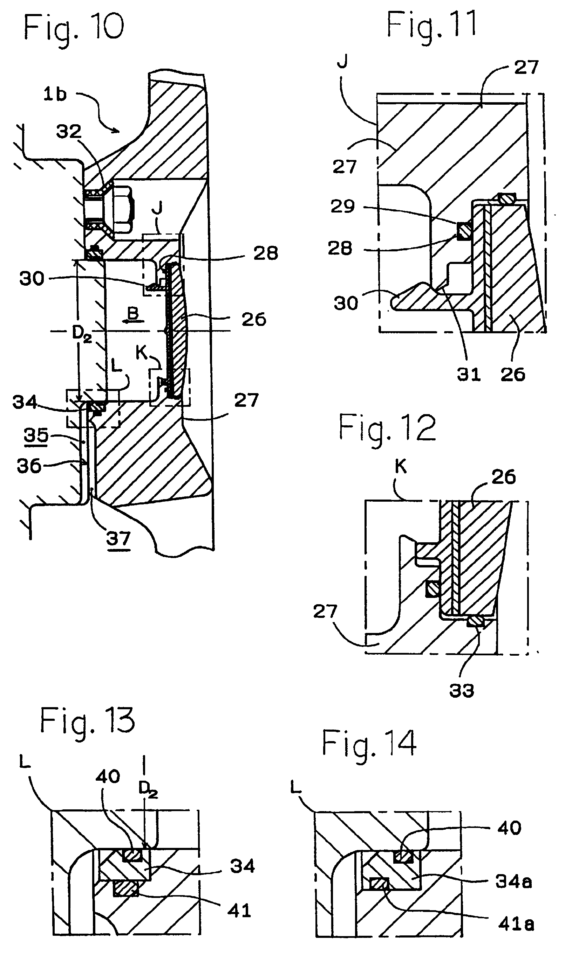

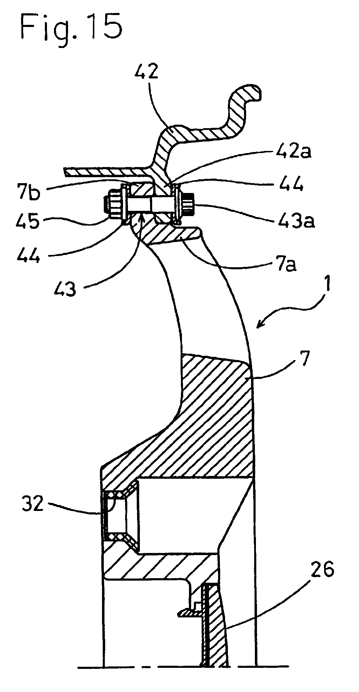

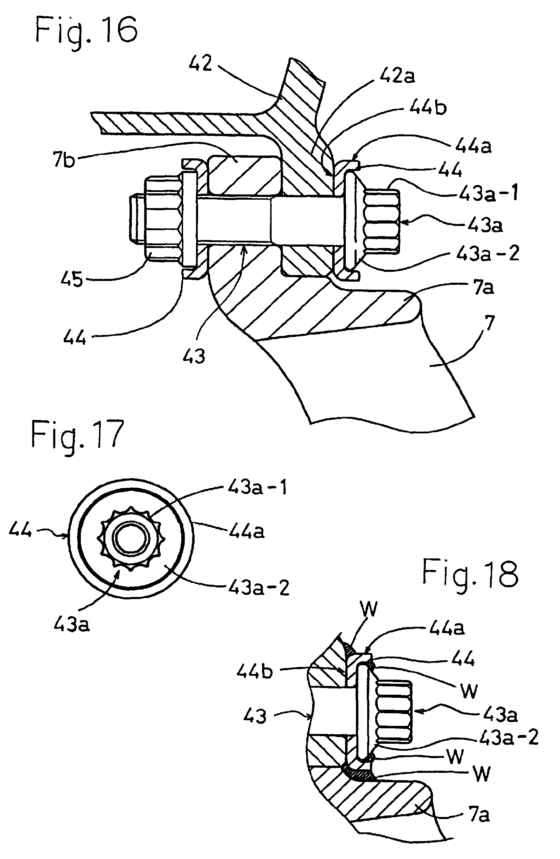

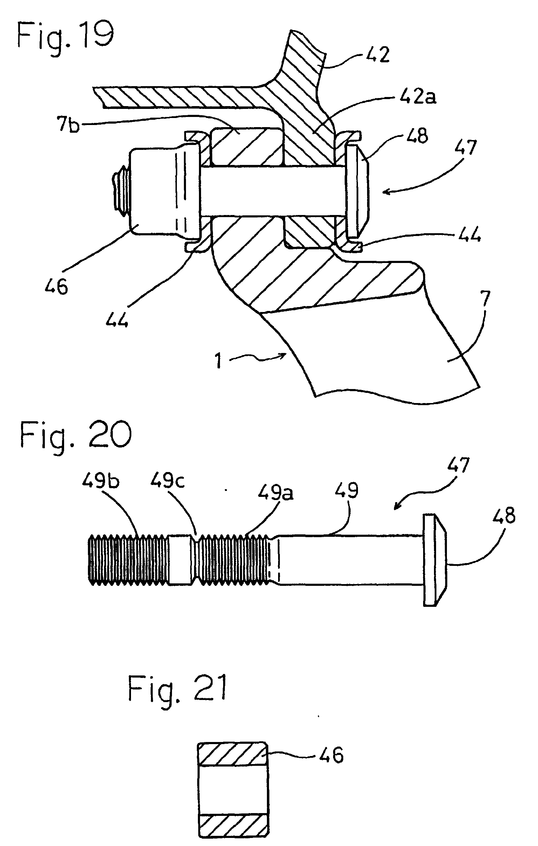

Fig. 1 is a partially omitted longitudinal section view showing Embodiment 1 of the invention and a state where a magnesium alloy wheel for vehicles is attached to a hub of a vehicle, Fig. 2 is an enlarged longitudinal section view of a portion E of Fig. 1, Fig. 3 is an enlarged longitudinal section view of a portion F of Fig. 1, Fig. 4 is a partially omitted longitudinal section view showing a state where a wheel has not yet been attached in Embodiment 2, Fig. 5 is a partially omitted longitudinal section view showing Embodiment 2 of the invention and a state where a magnesium alloy wheel for vehicles is attached to a hub of a vehicle, Fig. 6 is an enlarged longitudinal section view of a portion G of Fig. 5, Fig. 7 is an enlarged longitudinal section view of a portion H of Fig. 5, Fig. 8 is an enlarged longitudinal section view of a portion I of Fig. 5, Fig. 9 is an enlarged longitudinal section view showing a modification of the portion I of Fig. 5, Fig. 10 is a partially omitted longitudinal section view showing Embodiment 3 of the invention and a state where a magnesium alloy wheel for vehicles is attached to a hub of a vehicle, Fig. 11 is an enlarged longitudinal section view of a portion J of Fig. 10, Fig. 12 is an enlarged longitudinal section view of a portion K of Fig. 10, Fig. 13 is an enlarged longitudinal section view of a portion L of Fig. 10, Fig. 14 is an enlarged longitudinal section view showing a modification of the portion L of Fig. 10, Fig. 15 is a half longitudinal section view showing Embodiment 4 of the invention and a state where a rim is attached to a magnesium alloy wheel for vehicles, Fig. 16 is an enlarged longitudinal section view of main portions of Fig. 15, Fig. 17 is an enlarged front view of the head of a bolt of Fig. 15, Fig. 18 is an enlarged longitudinal section view illustrating a retention state of a medium, Fig. 19 is an enlarged longitudinal section view showing Embodiment 5 of the invention and a state where a rim is attached to a magnesium alloy wheel for vehicles, Fig. 20 is a side view showing an example of a rivet used in Embodiment 5, and Fig. 21 is a longitudinal section view of an adaptor corresponding to the rivet used in Embodiment 5.

### Best Mode for Carrying Out the Invention

Embodiment 1 will be described. Fig. 1 shows a state where a disk portion 7 of a magnesium alloy wheel (hereinafter, referred to as a wheel) 1 is attached to a hub flange 2 of an axle 3 of a vehicle. The portions E and F enclosed by one-dot chain lines in Fig. 1 are enlargedly shown in Figs. 2 and 3, respectively. The wheel 1 is fixed to the axle 3 with reference to a hub 4 protruding from a center portion of the hub flange 2, via insert bushes 32 made of an aluminum alloy by mounting bolts 5 respectively planted at plural places of the hub flange 2, and wheel nuts 6. A cover 8, a nut 9, and a threaded bush 10 are integrally configured, and fixed to a center portion of the disk portion 7 by means of a female thread 11 formed on the threaded bush 10. A seal ring 52 which seals a gap 51 between a boss 23 forming a center hole 50 communicated with a hub hole 17, and the threaded bush 10 is disposed. A step is formed on a peripheral face of each of the boss 23 and the threaded bush 10 so that the seal ring 52 is compressed by fastening the female thread 11 which is integral with the nut 9. A route from the outer peripheral face of the wheel 1 to the hub hole 17 is completely waterproofed by the seal ring 52.

On the other hand, a mounting face 18 of the wheel 1 to the axle 3, and the hub hole 17 are physically insulated from the hub flange 2 of the axle 3, and from the hub 4 by interposing a liner 53, respectively. In the liner 53, a plate 19 and a boss portion 20 are integrally configured, and a groove 22 for fittingly holding an elastic ring 21 is formed in the outer peripheral face of the boss portion 20. The elastic ring 21 has the following function. When the wheel 1 is to be attached to the axle 3, the boss portion 20 of the liner 53 is previously inserted into the hub hole 17 of the wheel 1, and the liner 53 is held by the hub hole 17 by using the elasticity of the elastic ring 21, thereby preventing the liner 53 from slipping off from the wheel 1. The outer diameter of the elastic ring 21 is set so as to, in the state where it is mounted to the groove 22, be greater than the diameter D₁ of the boss portion 20 by about 0.2 to 0.5 mm. When the elastic ring 21 is inserted into the hub hole 17, it is radially inward compressed against its elasticity, thereby preventing the boss portion 20 from slipping off from the hub hole 17. As the material of the liner 53, a material which generates a small potential difference with respect to magnesium, or a form in which a coating is applied may be used. In the embodiment, an aluminum material is used. Fig. 4 shows a state before the members are attached. The members of the figure which are identical with those of Figs. 1 to 3 are denoted by the same reference numerals, and their description is omitted.

In the embodiment, as the material of the elastic ring 21, a silicone rubber ring having beat resistance was used. Alternatively, thermosetting plastics having elasticity, or a beryllium alloy or an aluminum alloy which generates a small potential difference with respect to magnesium may be used. Even in the case of an iron material, it can be used when the surface is coated by plating or spraying of a metal such as zinc, beryllium, cadmium, or aluminum which generates a small potential difference with respect to magnesium. The elastic ring 21 is fittingly held by the groove 22 formed in the outer peripheral face of the boss portion 20. Even when a configuration where, as shown in Fig. 4, a similar groove is formed in the inner peripheral face of the hub hole 17 and the elastic ring 21 is fittingly held by the groove is employed, it is possible to attain the same objects as those described above.

Next, Embodiment 2 will be described. Fig. 5 shows an example in which nuts and a cover that are to be attached to a center portion of a disk 7a are configured in a different manner. In order to clarify the details, the portions G, H, and I enclosed by one-dot chain lines in Fig. 5 are enlargedly shown in Figs. 6 to 8, respectively. A cover 8a is disposed at the center portion of the disk 7a of a wheel 1a, and fixed to the wheel 1a by means of a threaded bush 10a fixed to a nut 9a, and a female thread 11a. A cap (ornament) 12a which is located at the center of the disk 7a is fixed to the nut 9a. With respect to the outer peripheral face of the cap, as shown in Fig. 6, water entry from the outside is prevented from occurring, by a small-diameter seal ring 13 which has elasticity such as rubber. As shown in Fig. 7, an annular groove 15 is formed in a face where the disk 7a is contacted with an outer peripheral edge portion of the cover 8a, and a large-diameter seal ring 16 is fittingly held in the annular groove 15. When the nut 9a is fastened in the direction of the arrow A by means of the female thread 11a, the cover 8a is moved via a packing 14 in the direction of the arrow A, and the large-diameter seal ring 16 is compressed to prevent water from entering through the outer peripheral edge portion of the cover 8a. Preferably, the materials of the large-diameter seal ring 16 and the small-diameter seal ring 13 are rubber or plastics having elasticity and heat resistance. In the embodiment, silicone rubber was used. As described above, the large-diameter seal ring 16 is directly joined by a rubber adhesive agent into the annular groove 15 formed in the disk 7a. Alternatively, the annular groove 15 may not be specially disposed, and the large-diameter seal ring 16 may be directly joined to the cover 8a or the disk 7a by an adhesive agent. Also in this configuration, it is possible to attain the predetermined object of preventing water entry from occurring. According to the above-described configuration of Embodiment 2, the entry path of water from the surface of the disk 7a in the wheel 1a to the hub hole 17 and the center hole 50 can be interrupted. As enlargedly shown in Fig. 8, also in a configuration where a groove 25 is formed in the upper face of a convex portion of a boss portion 23a forming the center hole 50 and a seal ring 24 is fittingly held by the groove, it is possible to prevent water from entering from the cover 8a. As shown in Fig. 9, the portion may have another configuration where the face of the convex portion of the boss portion 23a is chamfered to dispose a seal ring 24a in the face of the convex portion, a bent portion 8c is formed in the inner peripheral edge portion of a cover 8b, and the seal ring 24a is compressed by a movement in the direction of the arrow A after fastening, thereby producing watertightness. According to this configuration, the bent portion 8c of the inner peripheral edge portion of the cover 8b has slight elasticity, and hence easily conforms to the seal ring 24a.

Figs. 10 to 13 show Embodiment 3. In Embodiment 3, a cover and the like are not disposed at a center portion of a dish 27 of a wheel 1b, and a cap (ornament) 26 is directly attached to the center portion of the disk 27. A seal ring 28 is disposed on a joining face between the disk 27 and the cap 26. In order to clarify the details, the portions J, K, and L enclosed by one-dot chain lines in Fig. 10 are enlargedly shown in Figs. 11 to 13, respectively. As clearly shown in Fig. 11, an annular groove 29 is formed on the side of the disk 27, and the seal ring 28 is attached to the groove. A hook 30 which is integrally attached to the cap 26 is inserted into a cap set hole 31 of the dish 27, so that the cap 26 is pulled into in the direction of the arrow B of Fig. 10 to press the seal ring 28, thereby preventing water from entering from the outside. Also in the embodiment, the groove 29 may not be specially disposed, and the seal ring 28 having elasticity such as a rubber ring may be simply disposed, or the ring may be bonded to the disk 27 or the cap 26. Fig. 12 shows a state where the sealing is realized by the outer peripheral face of the cap 26. A seal ring 33 is disposed on the side of the disk 27 and fixed. Alternatively, a groove may be formed in the outer peripheral face of the cap 26, and the seal ring 33 is mounted thereto.

Referring to Fig. 10, as a waterproof structure for the side of the hub hole 17 of the mounting face of the wheel 1b, also a ring 34 having a diameter which coincides with the hub diameter D₂ must be disposed as shown Fig. 13. In a recent vehicle, a flange face has a so-called flat shape and a recess portion 35 is not formed. If also a hub mounting face 36 on the side of the wheel has a flat shape, therefore, water does not enter the hub hole 17 of the wheel 1b under the state where the wheel 1b is fixed by mounting bolts. By contrast, if a recess portion 37 is formed in the hub mounting face 36 of the wheel 1b, it is preferable to dispose the ring 34. Usually, the ring 34 is made of an aluminum material which generates a small potential difference with respect to magnesium. Alternatively, the ring may be made of an iron material the surface of which is coated by plating or spraying of a metal such as zinc, beryllium, or cadmium. As shown in Fig. 13, the ring 34 has at its inner diameter side a seal ring 40 made of a rubber material having high heat resistance or thermosetting plastics, and a seal ring 41 disposed in the wheel hub is closely attached to the outer diameter side of the ring, whereby water or the like is prevented from entering through the mounting face of the wheel. As shown in Fig. 14, seal rings 40 and 41a may be attached to the sides faces of a ring 34a, respectively. Also in this case, it is possible to attain a similar water entry prevention effect.

Figs. 15 to 18 show Embodiment 4. Fig. 15 is a half longitudinal section view showing a state where a rim 42 is attached to a peripheral edge portion 7a of the disk 7 of the magnesium alloy wheel 1. The rim 42 has outer and inner rims. A cap (ornament) 26 is fittingly attached to a center portion of the disk 7. The reference numeral 32 denotes an insert bush made of aluminum. The insert bush is pressingly inserted into the disk 7 and serves as a portion to which, when the wheel 1 is to be mounted to the hub flange of the axle, a wheel nut (not shown) is attached.

In order to allow an inner flange 42a of the rim 42 to be mounted without being eccentric, an annular outer flange 7b is formed on the peripheral edge portion 7a of the disk 7. A bolt 43 which is an example of the fastening member is inserted into a hole which passes through the inner flange 42a of the rim 42 and the outer flange 7b of the disk 7. In this case, a flanged washer 44 is interposed between the bolt head 43a and the inner flange 42a. On the side of the screw, a flanged washer 44 is interposed between the nut 45 and the outer flange 7b of the disk 7. In order to clarify these portions, enlarged views of the portions are shown in Figs. 16 to 18. In the embodiment, as the flanged washers 44, washers made of aluminum were used. Alternatively, washers made of iron may be used. In this case, a material the surface of which is coated by plating or spraying of zinc, beryllium, or cadmium may be used.

Referring to Fig. 16, the head 43a of the bolt 43 consists of a serration portion 43a-1 with which a spanner is to be engaged, and an umbrella-like seat portion 43a-2. The flanged washer 44 has a recessed section shape, and consists of an annular portion 44b similar to a flat washer, and a flange portion 44a which erects from a peripheral edge portion of the annular portion. As shown in Fig. 18, in a place where a medium such as water or salt water is easily retained, there exist an peripheral edge of the seat portion 43a-2 of the bolt head 43a, and that of the annular portion 44b of the flanged washer 44. In these edges, however, the medium W is not connected with overriding the flange portions 44a. Therefore, there exists no medium through which the bolt 43 made of the iron material and the inner flange 42a of the rim 42 made of a magnesium alloy is short-circuited, and hence contact corrosion is prevented from occurring. This situation is applicable also to the side of the nut in the strictly same manner. The shape of the bolt head 43a is not restricted to that of the embodiment, and any usual shape may be used. It is preferable to use a shape in which the distance between the bolt head 43a and the magnesium alloy portion is long.

Fig. 19 shows Embodiment 5 which uses a rivet type fastening member. As clearly shown in Fig. 20, a rivet 47 consists of a flat head portion 48 and a stem 49. The stem 49 has parallel groove portions 49a and 49b at two places, and a neck portion 49c between the groove portions 49a and 49b. By using an adaptor 46 such as shown in Fig. 21, the inner rim flange 42a, and the outer flange 7b of the disk 7 are sandwiched between the flat head portion 48 and the adaptor 46, the stem 49 is pulled by a dedicated pulling machine which is not shown, while clamping the groove portion 49b, and the adaptor 46 is crimped so as to be fixed to the groove portion 49a. Thereafter, the neck portion 49c is cut. In the embodiment, as compared with the configuration such as Embodiment 4 where a bolt and a nut are used, friction is not produced in the flanged washer 44, and hence the coating for preventing contact corrosion from occurring is not damaged. Therefore, the effect of preventing contact corrosion from occurring can be stably maintained for a long term.

### Industrial Applicability

As described above, the magnesium alloy wheel for vehicles of the invention is a technique in which a seal ring is disposed between members communicated with a center hole including a hub hole of the magnesium alloy wheel, or a liner for preventing contact corrosion from occurring is interposed between a hub flange and an attaching portion of the wheel which is to be attached to a hub, whereby an electrically conductive medium such as water or salt water is prevented from entering the wheel and retaining therein, so that the durability of the magnesium alloy wheel is improved.

## Claims

1. A magnesium alloy wheel for vehicles characterized in that a seal ring is disposed between members communicated with a center hole including a hub hole of said magnesium alloy wheel, thereby forming a waterproof structure.

2. A magnesium alloy wheel for vehicles according to claim 1, wherein said wheel comprises a ring member onto which a seal ring for a hub of a vehicle is fitted.

3. A magnesium alloy wheel for vehicles characterized in that said wheel comprises a liner for preventing contact corrosion between a hub flange of a vehicle and a hub, and the magnesium alloy wheel, from occurring.

4. A magnesium alloy wheel for vehicles according to claim 3, wherein, in said liner, a boss portion having a hole diameter coincident with an outer diameter of said hub of said vehicle, and an outer diameter coincident with a diameter of a hub hole of said wheel, or a plurality of hook portions are integrally configured.

5. A magnesium alloy wheel for vehicles according to claim 3, wherein, as a material of said liner, a material which generates a small potential difference with respect to magnesium is selected, or said liner is formed by a coating made of a material which generates a small potential difference with respect to magnesium.

6. A magnesium alloy wheel for vehicles according to claim 3, wherein a waterproof seal ring is disposed around a boss portion which is fitted into said hub hole.

7. A magnesium alloy wheel for vehicles according to claim 4, wherein a waterproof seal ring is disposed around a boss portion which is fitted into said hub hole.

8. A magnesium alloy wheel for vehicles in which a disk and a rim of said magnesium alloy wheel are assembled together by being fastened by a fastening member made of an iron material such as alloy steel or stainless steel, wherein
a flanged washer which has a recessed section shape is used at a place where said fastening member abuts against said disk of said magnesium alloy wheel, said flanged washer having a property that a contact potential difference between a surface of said washer and magnesium is small.

9. A magnesium alloy wheel for vehicles according to claim 8, wherein said fastening member is one selected from a bolt, a nut, a rivet, and an adaptor.

10. A magnesium alloy wheel for vehicles according to claim 8, wherein a surface of said washer is formed by a coating of a metal such as zinc, beryllium, cadmium, or aluminum which generates a small contact potential difference with respect to magnesium.

11. A magnesium alloy wheel for vehicles according to claim 9, wherein a surface of said washer is formed by a coating of a metal such as zinc, beryllium, cadmium, or aluminum which generates a small contact potential difference with respect to magnesium.

12. A magnesium alloy wheel for vehicles according to claim 8, wherein said flanged washer itself may be made of aluminum.

13. A magnesium alloy wheel for vehicles according to claim 9, wherein said flanged washer itself may be made of aluminum.
